Europäisches Patentamt

(19) European Patent Office

Office européen des brevets

(11) Publication number: **0 307 783 B1**

(12) # EUROPEAN PATENT SPECIFICATION

(45) Date of publication of patent specification :
04.09.91 Bulletin 91/36

(21) Application number : 88114611.2

(22) Date of filing : 07.09.88

(51) Int. Cl.⁵ : **G03B 27/50**

(54) Apparatus for holding sensitized material in slitwise exposure type copying camera.

(30) Priority : 11.09.87 JP 229151/87
22.09.87 JP 238236/87

(43) Date of publication of application :
22.03.89 Bulletin 89/12

(45) Publication of the grant of the patent :
04.09.91 Bulletin 91/36

(84) Designated Contracting States :
**DE FR GB**

(56) References cited :
EP-A- 0 193 962
DE-A- 2 915 102
DE-A- 3 022 953
DE-A- 3 643 570
GB-A- 2 091 892
GB-A- 2 122 360
JP-A-61 130 800
US-A- 4 012 140
US-A- 4 142 793

(73) Proprietor : **Dainippon Screen Mfg. Co., Ltd.**
**1-1, Tenjinkitamachi Teranouchi-Agaru**
**4-chome Horikawa-Dori**
**Kamikyo-ku Kyoto 602 (JP)**

(72) Inventor : **Shoji, Komatsubara**
**c/o Dainippon Screen Mfg. Co., Ltd. Hikone**
**Plant**
**480-1 Takamiya-cho Hikone-shi Shiga (JP)**
Inventor : **Masahiko, Takeuchi**
**c/o Dainippon Screen Mfg. Co., Ltd. Hikone**
**Plant**
**480-1 Takamiya-cho Hikone-shi Shiga (JP)**
Inventor : **Yasuyuki, Oka**
**c/o Dainippon Screen Mfg. Co., Ltd. Hikone**
**Plant**
**480-1 Takamiya-cho Hikone-shi Shiga (JP)**

(74) Representative : **Goddar, Heinz J., Dr. et al**
**FORRESTER & BOEHMERT**
**Widenmayerstrasse 4/I**
**W-8000 München 22 (DE)**

## Description

## BACKGROUND OF THE INVENTION

### Fiel of the Invention

The present invention relates to a reprocamera with slitwise exposure and, more specifically, to an apparatus for holding a sensitized material in the reprocamera.

### Description of the Prior Art

A reprocamera is used for forming a plate for reproduction from an original. The reprocamera is generally larger than a normal copying machine. The reprocamera should provide images of very high quality, it must be handled under daylight condition as is the copying machine, and it should occupy an area as small as possible. The slitwise exposure has been employed in the reprocameras for reproduction for these reasons.

A reprocamera of this type such as shown in Fig. 1 has been provided to the reproduction industry by the applicant of the present invention (JP-A-61-130800).

The conventional reprocamera comprises an original holder 101 holding flat an original 103 ; a sensitized material holder 108 holding a sensitized material 121 in parallel to the original 103 ; a projecting optical system 110 comprising an original illuminating system provided movable in relation to the original holder 101 and the sensitized material holder 108 ; and sensitized material conveying device 120 provided for feeding discharging the sensitized material 121 to and from the sensitized material holder 108. The projecting optical system 110 runs between the original holder 101 and the sensitized material holder 108, thereby projecting slitwise images of the original 103 on the sensitized material 121. A developing apparatus 137 may be provided below the body of the camera.

In the conventional reprocamera, the sensitized material holder 108 and the original holder 101 are arranged in parallel to each other, whereby the space occupied by the whole apparatus is made small. Since the projecting optical system 110 runs between the original holder 101 and the sensitized holder 108 both being stationary, the image of the original 103 is scanned and exposed on the sensitized material 121, which structure is suitable for equal scale magnification. For variable scale magnification, an optical system and the like for variable scale magnification should be provided between the sensitized material holder 108 and the original holder 101. This requires much space between the sensitized material holder 108 and the original holder 101, enlarging the apparatus. Therefore, the conventional reprocamera with slitwise exposure is not suitable for variable scale magnification.

## SUMMARY OF THE INVENTION

Therefore, an object of the present invention is to solve the aforementioned difficulties.

The above described objects of the present invention can be attained by a slitwise exposure type reprocamera according to claim 1.

Since the reprocamera comprises the above described components, the sensitized material conveying means and the original holding means, which were opposed to each other in the prior art, are not opposed. Consequently, a compact reprocamera with slitwise exposure can be provided.

According to a preferred embodiment of the present invention, the optical system comprises a variable scale magnification optical system which turns the original image into an image of a prescribed size in accordance with a given relation, comprising a relation of variable scale magnification for turning the original image into an image of a prescribed size.

Since the reprocamera with slitwise exposure is structured as described above, it is compact and capable of variable scale magnification.

According to a more preferred embodiment of the present invention, the cylindrical sensitized material conveying means comprises a cylindrical drum serving as a guide for conveying the sensitized material, and a sensitized material holding means for holding the sensitized material on the cylindrical drum. The sensitized material holding means comprises charging means for holding the sensitized material using static electricity.

Since the reprocamera with slitwise exposure comprises the above described components, the sensitized material is attracted onto the cylindrical drum by the static electric charge. There is no external force applied on the cylindrical drum when the sensitized material is attracted on the cylindrical drum to be conveyed. Therefore, there is no vibration on the cylindrical drum. Consequently, a reprocamera with slitwise exposure can be provided in which the resolution is not degraded.

According to a more preferred embodiment of the present invention, the cylindrical drum is formed of a conductive material and has an outer cylindrical surface and a support for rotatably supporting the drum itself ; the charging means comprises a direct voltage applying device for generating electricity for charging; and the electric charge is transmitted onto the outer cylindrical surface of the cylindrical drum through the support axis.

Since the reprocamera with slitwise exposure comprises the above described components, the whole cylindrical drum can be charged if only a direct voltage applying device is provided. Consequently, a reprocamera with slitwise exposure can be provided which has cylindrical sensitized material holding means of a simple structure capable of holding a sensitized material.

These objects and other objects, features, aspects and advantages of the present invention will become more apparent from the following detailed description of the present invention when taken in conjunction with the accompanying drawings.

BRIEF DESCRIPTION OF THE DRAWINGS

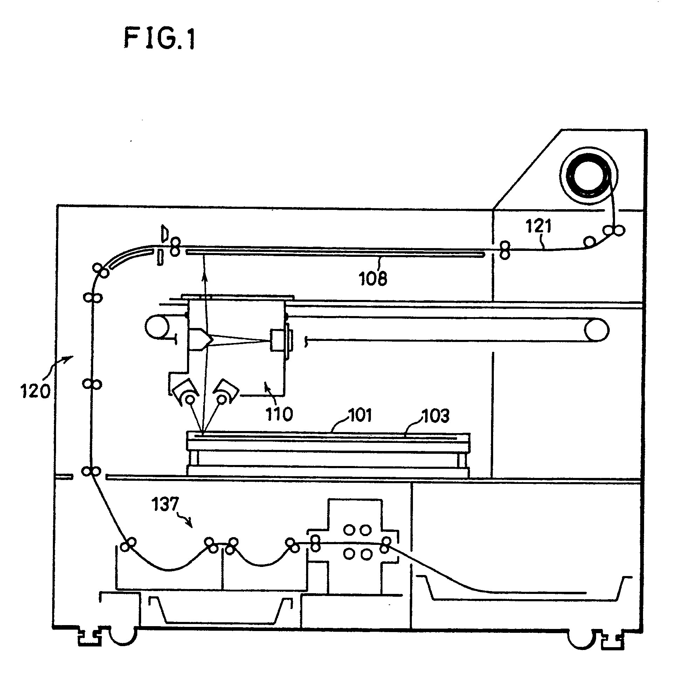

Fig. 1 shows a conventional reprocamera with slitwise exposure ;
Fig. 2 is a perspective view schematically showing a reprocamera with slitwise exposure in accordance with the present invention ;
Fig. 3 is a schematic cross sectional view of the reprocamera in accordance with the present invention ;
Fig. 4 shows an embodiment of the present invention.

DESCRIPTION OF A PREFERRED EMBODIMENT

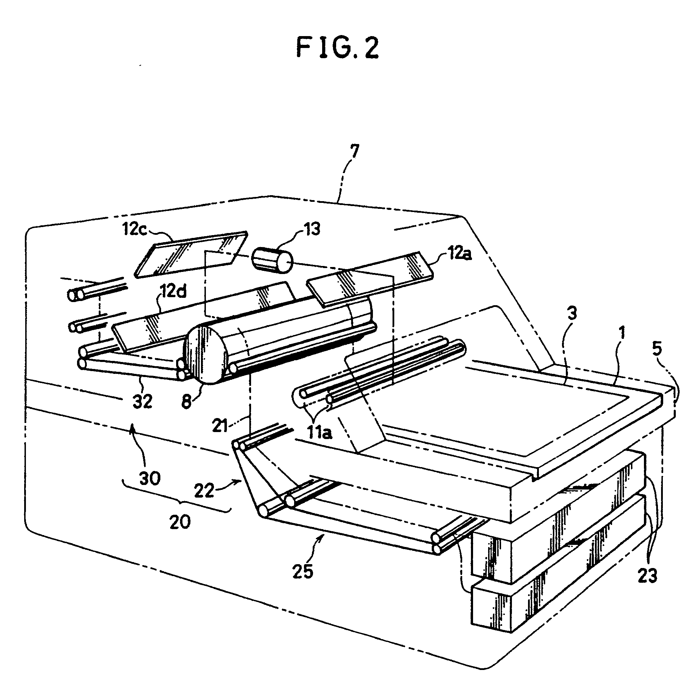

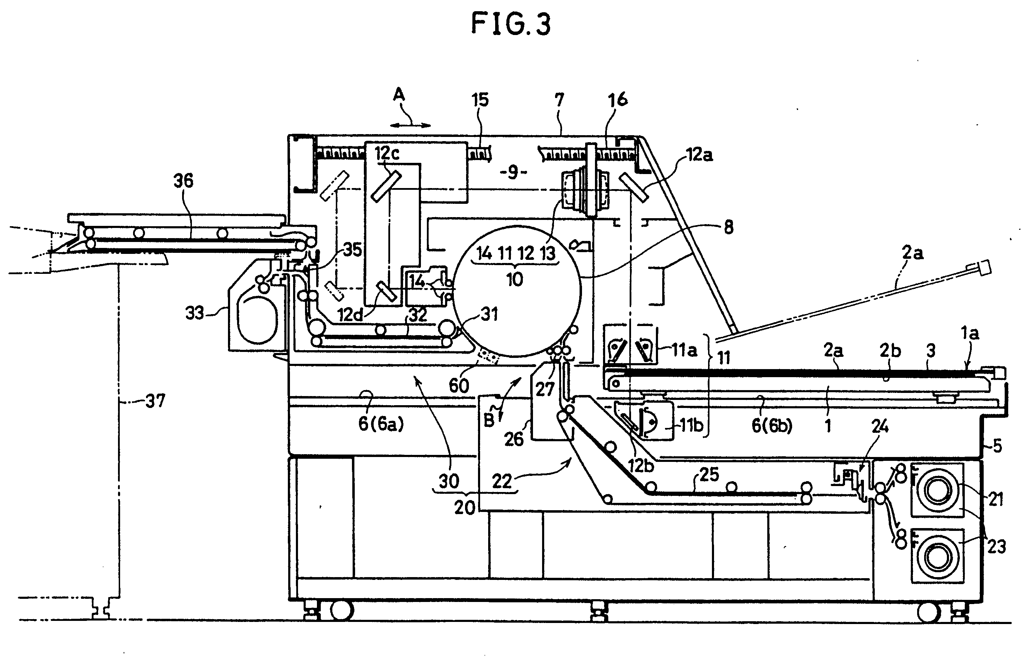

The reprocamera with slitwise exposure in accordance with the present invention will be described in the following with reference to Figs. 2 and 3.

The reprocamera with slitwise exposure in accordance with the present invention comprises an original holder 1 holding flat an original 3 and provided movable in the horizontal direction along the moving path 6 ; a cylindrical drum 8, rotated in synchronization with the movement of the original holder 1, for holding a sensitized material which is pivotally supported above the moving path 6 ; a projecting optical system 10 for variable scale magnification arranged in a space 9 around the outer periphery of the cylindrical drum 8 for forming an image of the original 3 at variable scale magnification ; and a sensitized material conveying apparatus 20 adapted to feed discharge the sensitized material 21 to and from the sensitized material holding cylindrical drum 8. The original holder 1 and the sensitized material holding cylindrical drum 8 are driven in synchronization with each other, and the slitwise images of the original 3 are projected on the sensitized material on the drum 8 through the projecting optical system 10 for variable scale magnification.

The original holder 1 is provided movable in the horizontal direction on a moving rail on a base frame 5 forming a moving path 6, with the original 3 being pressed and held between two transparent plates 2a and 2b.

The moving path 6 comprises an inner moving path 6a arranged inside of the camera casing 7 and an outer moving path 6b extending outside of the camera casing 7. The original holder 1 is arranged on the outer moving path 6b, on which the original 3 is deposited. The original holder 1 is once returned to the original portion of the inner moving path 6a and moved to the outer moving path 6b for scanning exposure. The original 3 is set on and removed from the original holder 1 with the upper transparent plate 2a for pressure contact opened to the operating side (the right side on the figure) and shown in the phantom line of Fig 3. The scanning exposure is started from the side of the operation side end 1a of the original holder 1 (the right side end of the original holder in Fig. 3).

In such structure, only one side of the original 3 should be aligned with the operating side end 1a of the original holder 1 to be set therein, which is convenient especially when the original is large.

The sensitized material 21 is conveyed from the sensitized material conveying apparatus 20 from the cassette 23 to be wound on the cylindrical drum 8. The sensitized material 21 must be conveyed in synchronization with the rotation of the cylindrical drum 8. The following methods are proposed for this purpose.

According to one embodiment, the sensitized material is attracted and held on the outer cylindrical surface of the cylindrical drum by static electricity.

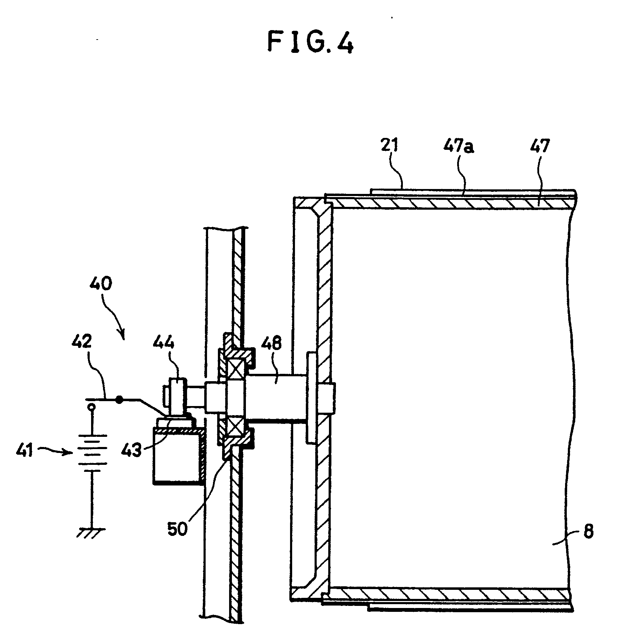

Fig. 4 shows the said embodiment of the present invention, which is a cross sectional view from one end portion of the cylindrical drum 8 shown in Fig. 3. Referring to Fig. 4, the cylindrical drum 8 is formed of a conductive light metal material such as an aluminum material and is connected to a charging device 40 for charging electrostatic charges on the surface of the drum. The charging device 40 comprises a power supply 41 for applying direct voltage ; a switch 42 ; and conductive connectors 43 and 44 for connecting the power supply 41 to the drum 8 through a support shaft 48.

The power supply 41 for supplying direct voltage preferably holds the potential of the drum surface at about 1 ~3 KV. When a polyester base film is used as the sensitized material, 1 ~2 KV of the surface potential of the drum is sufficient for attracting and holding the material by the electrostatic charges. Even if the polyester base film as the rollfilm is strongly curled, the surface potential of 2 ~3 KV is sufficient for the attraction and holding. If higher surface potential is applied, there will be a fog caused by discharge when the film 21 is separated from the drum 8 or dusts are attracted and deposited on the surface of the sensitized material, causing a number of pin holes generated on the film plate which has been exposed and developed.

The surface 47 of the drum 8 is preferably covered by a film 47a formed of a dielectric material so that there will be no leak even if an operator touches the surface during maintenance operation of the apparatus and so on. If a charger 60 such as shown by a dotted line in Fig. 3, which will be described later, is used as the charging member, the dielectric film 47a must be provided. The said dielectric film 47a is preferably black so that the light transmitted through the sensitized material 21 is not reflected on the surface of the drum. This is in consideration of the case in which a film is used.

The reference numeral 50 of Fig. 4 denotes a flange made of an insulating resin provided at the bearing portion.

In the above described embodiment, the charging device comprises the power supply for applying direct voltage conductively-connected to the drum through the support shaft. However, it is not limited to this type, and a known charger 60 generating corona discharge may be arranged near the outer cylindrical surface of the drum 8 as shown by the dotted line of Fig 3.

When the charger 60 is employed, the charging is effected with the drum 8 being rotated. The drum 8 need not be rotated when the charging device 40 is used, which is convenient in controlling the rotary position of the drum 8. More specifically, the drum 8 can be charged stationarily with the tip end of the sensitized material aligned with the reference position for drum rotation at the start of exposure.

The cylindrical drum 8 is rotarily driven in synchronization with the speed of movement of the original holder 1 in accordance with a prescribed set magnification rate by a rotary driving source (not shown) which is different from the scanning driving source (not shown) of the original holder 1. In this embodiment, the speed of rotation of the cylindrical drum 8 is constant regardless of the set magnification rate, while the speed of movement of the original holder 1 is changed appropriately in accordance with the set magnification rate. The synchronous driving technique is known, so that the details thereof will be omitted.

The projecting optical system 10 for variable scale magnification is arranged in a space 9 around the cylindrical drum 8 in the camera casing 7. The optical system 10 comprises an original illuminating lamp 11, a plurality of mirrors 12a to 12d for inverting the light path, an image forming lens 13, and a set of slit plates 14 enabling adjustment of width of the slit.

The original illuminating lamp 11 comprises a reflecting illuminating lamp 11a arranged on the upper side of the moving path 6 and a transmitting illuminating lamp 11b arranged in the lower side of the moving path 6, which are appropriately switched in accordance with the type of the original.

The image forming lens 13 and a set of inverting mirrors 12c and 12d behind the lens are independently moved in the direction of the arrow A by separate driving ball threads 15 and 16, respectively. Accordingly, the copying magnification rate is changed.

The sensitized material conveying apparatus 20 comprises a feeding device 22 for feeding the sensitized material 21 to the cylindrical drum 8, and a discharging device 30 for discharging the sensitized material 21 from the cylindrical drum 8. The feeding device 22 comprises a rollfilm cassette 23 ; a cutter 24 which cuts the film 21 fed from the cassette 23 to a required length ; a belt conveyer 25 conveying the film 21 to the drum 8 ; a guiding member 26 provided turnable in the direction of the arrow B for guiding the film 21 from the belt conveyer 25 to the drum 8 across the moving path 6 of the original holder 1 ; and a feed roller 27 which feeds the film 21 toward the drum 8.

The discharging device 30 comprises a separating pawl 31 which is in contact with the cylindrical drum 8 for separating the exposed film 21 from the drum 8 ; a discharging belt conveyer 32 ; and a film magazine 33. In Fig. 3, the reference numeral 37 denotes an automatic developer for developing the sensitized material 21 ; 36 denotes a conveyer for conveying the sensitized material 21 to the automatic developer 37 ; and 35 denotes a switching guide plate for switching the direction of the film to the said film magazine 33 or to the automatic developer 37.

The operation of the above described reprocamera will be briefly described in the following.

First, when the power is turned on, the positions of the image forming lens 13, mirrors 12c-12d and of the cutter 24 are reset.

Thereafter, the conditions for taking an image such as reproduction magnification rate, conditions for exposure, the length of the film are inputted from an operating panel, not shown. Thereafter, when the film set button is pressed, electrostatic charges are generated on the surface of the drum 8 by the charging device, and the image forming lens 13 and the mirrors 12c and 12d are moved to the positions corresponding to the set magnification rate, to be stopped there. Meanwhile, the sensitized material 21 is fed out from the cassette 23 and cut to the required length by the cutter 24.

The cut film 21 is transferred through the conveyer 25, the guiding member 26 and the feed roller 27 to be wound around the sensitized material holding cylindrical drum 8, and the cylindrical drum 8 is stopped at the drum origin position (not illustrated).

The original 3 is set in the original holder 1 after the film set button is pressed and before the sensitized material 21 is attached on the cylindrical drum 8.

Thereafter, when the exposure start button is pressed, the guiding member 26 which intercepted the moving path 6 of the original holder 1 is turned in the direction of the arrow B to open the moving path 6, and the original holder 1 is once transported to the inner portion of the inner moving path 6a to be positioned at the origin. At this position of the origin, the operating side end 1a of the original holder 1 is placed more left than the position of the exposure optical axis.

Simultaneously with the rotation of the drum 8, the illuminating lamp 11 is turned on, the movement of the original holder 1 is started at the timing corresponding to the reproduction magnification rate, and the drum 8 is rotated in synchronization with the movement.

When the original holder 1 is moved by a prescribed length and placed on the outer moving path 6b, the illuminating lamp 11 is turned off and the original holder is returned to the original setting position. The exposed film 21 is separated from the drum 8 by the separating pawl 31 from the starting end side, and is stored in the film magazine 33 or fed to the automatic developer 37 through the conveyer 32. The charging device is turned off when the sensitized material 21 is fully separated from the drum 8.

The image pickup cycle is repeated in the similar manner.

According to the present invention as claimed, the sensitized material is conveyed along a drum type sensitized material holding apparatus. Consequently, the sensitized material holding apparatus can be made compact. An optical system for variable scale magnification can be arranged making use of the space defined within the drum type sensitized material holding apparatus which is made compact. When the sensitized material is held on the sensitized material holding apparatus by the static charges, there will be no vibration on the drum compared with a case in which it is held by a vacuum attraction. Consequently, a reprocamera with slitwise exposure can be provided which is compact and capable of variable scale magnification, and in which the resolution of images is not degraded.

Although the present invention has been described and illustrated in detail, it is clearly understood that the same is by way of illustration and example only and is not to be taken by way of limitation, the scope of the present invention being limited only by the terms of the appended claims.

## Claims

1. Reprocamera with slitwise exposure comprising means (1) for holding an original (3) with its surface having an image to be read upward and an optical system (10) for scanning the original (3) held by said holding means (1), said holding means (1) being movable relative to said scanning means, and means for conveying sensitised material (21) to record thereon an image formed by said optical system by slitwise exposure of said original (3), characterized in that said means for conveying the sensitised material comprises a drum (8) to which the sensitised material (21) can be attached, said optical system (10) is adjustable to form an image of said original (3) of selected magnification on said sensitised material (21), said drum (8) is rotatable at a constant speed, and said holding means (1) is movable at a speed related to the selected magnification.

2. Reprocamera with slitwise exposure according to claim 1, characterized in that moving means (6) for moving said original holding means (1) on a moving path extending in a horizontal direction are provided, and said drum (8) is arranged above said moving path.

3. Reprocamera with slitwise exposure according to claim 1 or claim 2, characterized in that said drum (8) has associated charging means (40,60) for holding said sensitised material (21) by using static electric charge.

4. Reprocamera with slitwise exposure according to claim 3, characterized in that said charging means (40) comprises a power supply for applying direct voltage, and said electric charge is transferred onto the outer cylindrical surface (47) of said drum (8) through an axis (48) supporting the drum.

5. Reprocamera with slitwise exposure according to claim 3, characterized in that the outer cylindrical surface (47) of said drum (8) is covered by a dielectric material, and said charging means (60) comprises a corona discharger (60) for charging the outer cylindrical surface of said drum (8) provided adjacent to the outer cylindrical surface of said drum (8).

## Patentansprüche

1. Reprokamera mit schlitzweiser Belichtung, die Mittel (1) zum — mit der das zu lesende Bild tragenden Fläche nach oben weisenden — Halten einer Vorlage (3), ein optisches System (10) zum Abtasten der von dem Haltemittel gehaltenen Vorlage (3) aufweist, wobei die Haltemittel (1) relativ zu den Abtastmitteln beweglich sind, und Mittel zum Transportieren eines sensibilisierten Materials (21) zum Aufzeichnen des von dem optischen System geformten Bildes durch schlitzweise Belichtung der Vorlage (3) aufweist, dadurch gekennzeichnet, daß das Mittel zum Transportieren des sensibilisierten Materials eine Trommel (8) aufweist, auf die das sensibilisierte Material (21) aufgebracht werden kann, das optische System (10) einstellbar ist, um die Vorlage (3) in einer gewünschten Vergrößerung auf dem sensibilisierten Material (21) abzubilden, die Trommel (8) mit einer konstanten Geschwindigkeit drehbar ist und das Haltemittel (1) mit einer der gewählten Vergrößerung entsprechenden Geschwindigkeit beweglich ist.

2. Reprokamera mit schlitzweiser Belichtung nach Anspruch 1, dadurch gekennzeichnet, daß das Bewegungsmittel (6) zum Bewegen des die Vorlage haltenden Mittels (1) auf einem sich horizontal erstreckenden Bewegungsweg vorgesehen ist, und die Trommel (8) oberhalb des Bewegungsweges angeordnet ist.

3. Reprokamera mit schlitzweiser Belichtung nach Anspruch 1 und Anspruch 2, dadurch gekennzeichnet, daß die Trommel (8) zugehörige Ladungsmittel (40, 60) zum Halten des sensibilisierten Materials (21) durch Verwendung einer statischen elektrischen Ladung aufweist.

4. Reprokamera mit schlitzweiser Belichtung nach Anspruch 3, dadurch gekennzeichnet, daß das Ladungsmittel (40) eine Spannungsversorgung zur Aufbringung einer Gleichspannung aufweist und die elektrische Ladung auf die äußere zylindrische Fläche (47) der Trommel durch eine die Trommel tragende Achse (48) aufgebracht wird.

5. Reprokamera mit schlitzweiser Belichtung nach Anspruch 3, dadurch gekennzeichnet, daß die äußere zylindrische Fläche (47) der Trommel (8) von einem dielektrischen Material abgedeckt wird und das Ladungsmittel (60) einen Korona-Entlader (60) zum Laden der äußeren zylindrischen Fläche der Trommel (8) in der Nähe der äußeren zylindrischen Fläche der Trommel (8) aufweist.

## Revendications

1. Caméra reprographique avec exposition par fente comportant des moyens (1) destinés à maintenir un original (3) avec sa surface ayant une image à lire vers le haut et un système optique (10) destiné à balayer l'original (3) maintenu par les dits moyens de maintien (1), les dits moyens de maintien (1) étant mobiles par rapport aux dits moyens de balayage, et des moyens destinés à transporter un matériau sensible (21) afin d'enregistrer dessus une image formée par le dit système optique au moyen d'une exposition par fente du dit original (3), caractérisé en ce que les dits moyens destinés à transporter le matériau sensible comporte un tambour (8) sur lequel le matériau sensible (21) peut être fixé, le dit système optique (10) est réglable de façon à former une image du dit original (3) avec un agrandissement choisi sur le dit matériau sensible (21), le dit tambour (8) peut tourner à une vitesse constante, et les dits moyens de maintien (1) sont mobiles à une vitesse liée à l'agrandissement choisi.

2. Caméra reprographique avec exposition par fente selon la revendication 1, caractérisée en ce que des moyens de déplacement (6) destinés à déplacer les dits moyens de maintien d'original (1) le long d'un passage de déplacement s'étendant dans une direction horizontale sont prévus, et le dit tambour (8) est disposé au-dessus du dit passage de déplacement.

3. Caméra reprographique avec exposition par fente selon la revendication 1 ou 2, caractérisée en ce que le dit tambour (8) possède des moyens de charge associés (40, 60) destinés à maintenir le dit matériau sensible (21) en utilisant une charge électrostatique.

4. Caméra reprographique avec exposition par fente selon la revendication 3, caractérisée en ce que les dits moyens de charge (40) comportent une alimentation destinée à appliquer une tension continue, et la dite charge électrique est transférée sur la surface cylindrique extérieure (47) du dit tambour (8) par l'intermédiaire d'un axe (48) supportant le tambour.

5. Caméra reprographique avec exposition par fente selon la revendication 3, caractérisée en ce que la surface cylindrique extérieure (47) du dit tambour (8) est recouverte d'un matériau diélectrique, et les dits moyens de charge (40) comportent un élément de décharge à effet corona (60) destiné à charger la surface cylindrique extérieure du dit tambour (8) prévu de façon adjacente à la surface cylindrique extérieure du dit tambour (8).

# FIG.1

# FIG. 2

# FIG.3

EP 0 307 783 B1

# FIG.4